(19) Europäisches Patentamt

European Patent Office

Office européen des brevets

(11) EP 0 630 995 B1

(12) EUROPÄISCHE PATENTSCHRIFT

(45) Veröffentlichungstag und Bekanntmachung des Hinweises auf die Patenterteilung:
04.08.1999 Patentblatt 1999/31

(51) Int Cl.⁶: **D01F 6/62**, C08J 5/18
// C08L67:02

(21) Anmeldenummer: 94109367.6

(22) Anmeldetag: 17.06.1994

(54) **Multifilament-Garn aus Polyäthylennaphthalat und Verfahren zu seiner Herstellung**

Polyethylene naphthalate yarn and process for its production

Fil de polyéthylène-naphtalate et procédé pour sa production

(84) Benannte Vertragsstaaten:
CH DE ES FR GB IT LI LU NL PT SE

(30) Priorität: 22.06.1993 DE 4320593

(43) Veröffentlichungstag der Anmeldung:
28.12.1994 Patentblatt 1994/52

(73) Patentinhaber: **Akzo Nobel N.V.**
6824 BM Arnhem (NL)

(72) Erfinder:
• **van den Heuvel, Christiaan Jurriaan Maria**
NL-6955 BR Ellecom (NL)
• **de Weijer, Anton Peter**
NL-6525 CM Nijmegen (NL)
• **Middeljans, Hendrik**
NL-6951 NM Dieren (NL)
• **Heuvel, Herman Max**
NL-6991 AL Rheden (NL)

(74) Vertreter: **Fett, Günter, Dipl.-Ing. et al**
**Akzo Nobel GmbH**
**Kasinostrasse 19-21**
**42103 Wuppertal (DE)**

(56) Entgegenhaltungen:
WO-A-93/14252          DE-A- 1 964 514
DE-A- 2 139 854        DE-A- 2 218 137
DE-A- 2 260 778        DE-A- 2 264 819
DE-A- 2 352 570        DE-A- 2 445 035
US-A- 4 026 973

• DATABASE WPI Section Ch, Week 9303 Derwent Publications Ltd., London, GB; Class A23, AN 93-024108 & JP-A-04 352 811 ( TEIJIN LTD) , 7.Dezember 1992

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Multifilamentgarn, ein Monofilament oder ein filmartiges Gebilde, welches zumindest überwiegend aus Polyäthylennaphthalat besteht, sowie ein Verfahren zur Herstellung derartiger Garne.

Ein solches Garn ist beispielsweise aus der DE-A-22 60 778 bekannt. Das dort beschriebene Garn weist einen Schmelzpunkt von mindestens 275°C auf. Der maximal erreichbare DSC-Schmelzpunkt, gemessen an einer Probenmenge von 8,5 mg bei einer Erhitzungsgeschwindigkeit von 10°C pro min, beträgt gemäß DE-A-22 60 778 bis zu 291,7°C. Dieser DSC-Schmelzpunkt, gemessen an einer Probenmenge von 8,5 mg bei einer Erhitzungsgeschwindigkeit von 10°C pro min, entspricht einem DSC-Schmelzpunkt, gemessen an einer Probenmenge von 2,5 mg bei einer Erhitzungsgeschwindigkeit von 20°C pro min, von 291°C. Aus den Beispielen geht hervor, daß offensichtlich die Erhöhung des Schmelzpunktes ursächlich mit der Erhöhung der Spinngeschwindigkeit zusammenhängt. Um den oben angegebenen höchsten Schmelzpunkt gemäß Beispiel 15 zu erreichen, ist eine Spinngeschwindigkeit von 8 000 m/ min erforderlich. Bei den für technische Garne praktisch realisierbaren Spinngeschwindigkeiten von maximal 6 000 m/ min ergeben sich laut DE-A-22 60 778 DSC-Schmelzpunkte, die unter 290°C (2,5 mg; 20°C/min), entsprechend 290,5°C (8,5 mg; 10°C/min) liegen. Es sind somit der DE-A-22 60 778 lediglich Garne für technischen Einsatzzweck beschrieben, die einen Schmelzpunkt von 275 bis 290°C aufweisen.

In der nachveröffentlichten (Art. 54(3) EPÜ) WO 93/14252 sind Garne aus Polyäthylennaphthalat beschrieben, die einen DSC-Schmelzpunkt von höchstens 294 °C aufweisen, wobei dieser DSC-Schmelzpunkt an einer Probenmenge von 10 mg bei einer Erhitzungsgeschwindigkeit von 20 °C pro min gemessen wird. Da ein DSC-Schmelzpunkt von 295,4 °C, gemessen nach dieser Methode (10 mg, 20°C/min) einem DSC-Schmelzpunkt von 293,7 °C, gemessen an einer Probenmenge von 2,5 mg bei einer Erhitzungsgeschwindigkeit von 20 °C/min, entspricht, kann davon ausgegangen werden, daß in WO 93/14252 Garne mit einem DSC-Schmelzpunkt von weniger als 293 °C offenbart sind, wenn der DSC-Schmelzpunkt an einer Probenmenge von 2,5 mg bei einer Erhitzungsgeschwindigkeit von 20 °C/min gemessen wird.

In DE-A-21 39 854 ist ein Verfahren beschrieben, über welches nach dem Spinnen bereits aufgewickelten Garnen nachträglich ein höherer Schmelzpunkt von mehr als 285°C vermittelt werden kann. Trotz des sehr aufwendigen Verfahrens werden auch hier nur DSC-Schmelzpunkte von weniger als 290°C erreicht. Die in Tabelle II angegebenen Werte von 290,3, 292,0 bzw 290,3°C bei konstanter Länge entsprechen nämlich DSC-Schmelzpunkten von deutlich unter 290°C, wie man leicht aus Tabelle I der DE-A-22 60 778 ableiten kann, in welcher die korrespondierenden Werte für DSC-Schmelzpunkt und DSC-Scmelzpunkt bei konstanter Länge angegeben sind.

Aufgabe der vorliegenden Erfindung ist es, Multifilamentgarne, Monofilamente oder Filme die zumindest überwiegend aus Polyäthylennaphthalat bestehen, und die insbesondere für den technischen Einsatz bestens geeignet sind, zur Verfügung zu stellen. Es ist auch Aufgabe der vorliegenden Erfindung, ein Verfahren zur Herstellung derartiger Garne, Filamente oder Filme zur Verfügung zu stellen, welches durch seine Unkompliziertheit besticht.

Diese Aufgabe wird bei einem Multifilamentgarn, Monifilament oder Film zumindest aus 85 Gew.% Polyäthylennaphthalat, mit einer Festigkeit von mindestens 400 mN/tex, herstellbar aus einem Polymer, welches einen Schmelzflußindex (Melt-Flow-Index) C von 3 bis 26 aufweist, dadurch gelöst, daß es einen DSC-Schmelzpunkt von zwischen 294 °C und 312°C aufweist, wobei der DSC-Schmelzpunkt an einer Probenmenge von 2,5 mg bei einer Erhitzungsgeschwindigkeit von 20°C pro min zu messen ist. Hierbei werden die Schmelze-Spitzen (peaks) der Garne mit einem differentiellen Scaning Calorimeter, Typ Perkin Elmer DSC-7 bestimmt, welcher mit Indium (Schmelzpunkt bei 156,6°C) und Zink (Schmelzpunkt bei 419,5°C) kalibriert wurde. Ein Tiegel mit 2,5 mg einer Garnprobe wird dann mit einer Geschwindigkeit von 20°C pro min erhitzt, wobei der Hitzeflußunterschied zwischen diesem Tiegel und einem leeren Referenztiegel in Form eines Thermogramms geschrieben wird.

Wie oben ausführlich erläutert, war ein Garn mit einem derart hohen DSC-Schmelzpunkt aus dem Stand der Technik nicht herleitbar. Es muß also als überraschend angesehen werden, daß es ein solches Garn überhaupt geben kann. Die erfindungsgemäßen Garne weisen eine ausgezeichnete Kombination von hoher thermischer Stabilität und hoher Dimensionsstabilität auf und eignen sich deshalb vorzüglich als Verstärkungsmaterial in Dachbedeckungen oder Elastomeren, zur Herstellung von Reifencorden, Airbag-Geweben, Filtermaterialien und Akkumulator-Wänden. Sie sind auch hervorragend für den Einsatz in Bodenstabilisierungs-Geweben bestens geeignet.

Bevorzugt besteht (bestehen) das Multifilamentgarn, die Monofilamente oder der Film mindestens zu 95 Gew. % aus Polyäthylennaphthalat. Als Polyäthylennaphthalat wird Polyäthylen-2,6-naphthalat besonders bevorzugt. Beispiele für Zusätze im Polymer sind zum einen die beim Schmelzspinnen üblichen Zusätze, wie Weißmacher, Avivagen oder ähnliche. Das Polymer kann jedoch auch andere Monomere wie beispielsweise Ester-bildende Zusätze enthalten, die mit den Polyäthylennaphthalat-Einheiten copolymerisiert sein können, wie beispielsweise Glykole wie Diäthylenglykol, Trimethylenglykol, Tetramethylenglykol, Hexamethylenglykol, Terephthalsäure, Isophthalsäure, Hexahydroterephthalsäure, Bibenzoesäure, Hydroxybenzoesäure, Adipinsäure, Sebazinsäure und Azelainsäure. In der Regel weist das erfindungsgemäße Multifilamentgarn, Monofilament oder der Film einen Heißluftschrumpf, gemessen nach 15 min Erhitzung auf 190°C, von weniger als 3,5 % auf.

Der Heißluftschrumpf wird folgendermaßen bestimmt: Die Garne werden bei 21°C und 65% relativer Luftfeuchte konditioniert. Garnproben, die bei einer Belastung von 5 mN/tex eine Anfangslänge von etwa 500 mm aufweisen, werden spannungslos 15 Minuten lang einer Temperatur von 190°C ausgesetzt. Der Heißluftschrumpf ist die relative Längenänderung (bei 5 mN/tex) des Garns, nachdem das behandelte Garn wieder bei 21°C und 65% relativer Luftfeuchte konditioniert war.

Zur Ermittlung eines Wertes werden die Messungen von 3 Garnproben zugrundegelegt.

Insbesondere ist das erfindungsgemäße Multifilamentgarn, Monofilament oder Film für technische Einsatzzwecke, beispielsweise für die Verstärkung von Fahrzeugluftreifen, besonders geeignet, wenn es eine Dimensionsstabilität von mehr als 120 aufweist, wobei die Dimensionsstabilität der Quotient der Festigkeit des Garns bei 2 % Dehnung in mN/tex dividiert durch den Heißluftschrumpf des Garns in % ist.

In weiteren besonders günstigen Weiterbildungen zeichnet sich das erfindungsgemäße Multifilamentgarn, Monofilament oder Film durch folgende Eigenschaften aus:

- es besitzt eine Dichte von mehr als 1350 kg/m$^3$, bevorzugt von mehr als 1362 kg/m$^3$
- es weist einen DSC-Schmelzpunkt von mindestens 295°C, bevorzugt von mindestens 300°C auf,
- sein Heißluftschrumpf, gemessen nach 15 min Erhitzung auf 190°C, beträgt weniger als 2,5 %, bevorzugt weniger als 1,6 %,
- es weist eine Dimensionsstabilität von mindestens 150, bevorzugt von mindestens 200 auf,
- es ist verstreckt.

Die gestellte Aufgabe wird bei einem Verfahren zur Herstellung des erfindungsgemäßen Multifilamentgarns, Monofilaments oder Film, bei dem erschmolzenes Polymer, welches mindestens 85 Gew. % Polyäthylennaphthalat enthält aus einer Mehrloch-Spinndüse extrudiert wird, die über Kühlung erstarrten Filamente bzw. der über Kühlung erstarrte Film mit einer Geschwindigkeit von 500 bis 10 000 m/min abgezogen werden, wobei die Filamente bzw. der Film vom Spinndüsenausgang bis zum ersten Abzugsorgan einem Verzug (Draw-Down) B von 40 bis 25 000 unterworfen werden, dadurch gelöst, daß als einzusetzendes Polymer ein Polymer mit einem Schmelzflußindex (Melt-Flow-Index) C von 3 bis 26 ausgewählt wird und Abzugsgeschwindigkeit A, Verzug B und der Schmelzflußindex C derart gewählt werden, daß $\phi > 1,15$, wobei

$$\Phi = \left[ \frac{2.5}{1 + e^{(-0.6*(\overline{\nu}0_5))}} \right]$$

und

3

$$\Psi = \frac{W_{13}}{1+e^{-0.6*\left[W_1*\left[\frac{(A-500)}{9500}*2-1\right]+W_2*\left[\frac{(B-40)}{24960}*2-1\right]+W_3*\left[\frac{(C-5)}{15}*2-1\right]+O_1\right]}} +$$

$$\frac{W_{14}}{1+e^{-0.6*\left[W_4*\left[\frac{(A-500)}{9500}*2-1\right]+W_5*\left[\frac{(B-40)}{24960}*2-1\right]+W_6*\left[\frac{(C-5)}{15}*2-1\right]+O_2\right]}} +$$

$$\frac{W_{15}}{1+e^{-0.6*\left[W_7*\left[\frac{(A-500)}{9500}*2-1\right]+W_8*\left[\frac{(B-40)}{24960}*2-1\right]+W_9*\left[\frac{(C-5)}{15}*2-1\right]+O_3\right]}} +$$

$$\frac{W_{16}}{1+e^{-0.6*\left[W_{10}*\left[\frac{(A-500)}{9500}*2-1\right]+W_{11}*\left[\frac{(B-40)}{24960}*2-1\right]+W_{12}*\left[\frac{(C-5)}{15}*2-1\right]+O_4\right]}}$$

und

| | | |
|---|---|---|
| $W_1 = 3{,}62416$ | $W_2 = -66{,}57265$ | $W_3 = -0{,}36305$ |
| $O_1 = -65{,}2267$ | $W_4 = -5{,}51435$ | $W_5 = -15{,}02366$ |
| $W_6 = -0{,}00704$ | $O_2 = -22{,}71156$ | $W_7 = 4{,}60509$ |
| $W_8 = -33{,}08694$ | $W_9 = -0{,}83813$ | $O_3 = -37{,}28374$ |
| $W_{10} = 43{,}44371$ | $W_{11} = 5{,}26325$ | $W_{12} = -5{,}66574$ |
| $O_4 = 29{,}64359$ | $W_{13} = -7{,}37680$ | $W_{14} = 7{,}17561$ |
| $W_{15} = 9{,}89252$ | $W_{16} = 3{,}02096$ | $O_5 = -1{,}59320$ |

Es ist selbstverständlich, daß für einen möglichst geringen Polymerabbau bis zur Spinndüse Sorge zu tragen ist.

Der Verzug ist definiert als der Quotient von Spinngeschwindigkeit, also der Geschwindigkeit, die dem Faden oder der Film mit dem ersten Antriebsaggregat verliehen wird, geteilt durch die Austrittsgeschwindigkeit der Schmelze aus der Spinndüse. Die Austrittsgeschwindigkeit v in m/min errechnet sich aus dem Durchsatz pro Spinnloch F in g/min, der angenommenen Dichte der Polymerschmelze d = 1 180 kg/m$^3$ und dem Düsenlochdurchmesser D in mm wie folgt:

$$v = \frac{4\ 10^9\ F}{p\ d\ D^2}$$

Der Schmelzflußindex (Melt-Flow-Index) C wird hierbei folgendermaßen bestimmt: Granulat wird in einem Taumeltrockner 8 Stunden lang bei 150°C und unter hohem Vakuum getrocknet. Zur Bestimmung des Schmelzflußindex wird ein Zwick Fließ Prüfgerät, Typ 4105 verwendet, in welches eine senkrechte Röhre mit 9,55 mm Durchmesser und mit einer Länge von 162 mm eingesetzt ist, deren unteres Ende einen Düsenkanal mit 2,095 mm Durchmesser und eine Länge von 8 mm aufweist. Die Röhre wird auf 310°C erhitzt und auf dieser Temperatur gehalten. Nach 15 Minuten wird die Röhre mit dem getrockneten Granulat rasch und vollständig gefüllt, auf welches ein Stempel gesetzt wird. Nach 4 Minuten wird der Stempel mit einer Last von 2 160 g beaufschlagt, so daß die aus dem Granulat entstandene Schmelze aus dem Düsenkanal gepreßt wird. Die zwischen der 5. und 6. Minute ausgetretene Menge wird gemessen. Der Schmelzflußindex ist der gemittelte Wert von drei Messungen der jeweils zwischen der 5. und 6. Minute ausgetretenen Menge umgerechnet in g/10 min.

Das erfindungsgemäße Verfahren gelingt besonders gut, wenn das verwendete Polymer bei einer Temperatur T ersponnen wird, wobei in Abhängigkeit vom Schmelzflußindex (MeltFlow-Index) C gilt:

$$100\ e^{-0,46\,C} + 300 \leq T \leq 100\ e^{-0,46\,C} + 325.$$

Besonders gute Ergebnisse werden erzielt, wenn gilt:

$$100\ e^{-0,46\,C} + 305 \leq T \leq 100\ e^{-0,46\,C} + 318.$$

Die Schmelzpunkterhöhung des gesponnenen Multifilamentgarns, der Monofilamente oder des Films gelingt besonders gut, wenn die aus der Spinndüse extrudierten Filamente oder Filme mit einem auf 10 bis 35°C gehaltenen Fluid mit einer Geschwindig keit von 0,1 bis 1,0 m/sec angeblasen werden. Die Anblasung kann quer oder durch eine radiale Luftströmung von innen nach außen oder von außen nach innen erfolgen. Beste Ergeb nisse erzielt man, wenn die aus der Spinndüse extrudierten Fäden bzw. der extrudierte Film mit einem auf 12 bis 25°C gehaltenen Fluid angeblasen werden, wobei sich eine Luftgeschwindigkeit von 0,2 bis 0,6 m/sec bestens bewährt hat.

Insbesondere ist es von Vorteil, wenn ein Polyäthylennaphthalat mit einen Schmelzflußindex (Melt-Flow-In-dex) C von 6 bis 20 eingesetzt wird, wenn die über Kühlung erstarrten Filamente bzw. der erstarrte Film mit einer Geschwindigkeit A von 500 bis 8 000 m/min abgezogen werden, wobei die Filamente bzw. der Film vom Spinndüsenausgang bis zum ersten Abzugsorgan einem Verzug (Draw-Down) B von 100 bis 10 000 unterworfen werden bzw. wird.

Besonders günstig ist ein Verfahren, bei dem ein Polyäthylennaphthalat mit einen Schmelzflußindex (Melt-Flow-Index) C von 7 bis 15 eingesetzt wird, die über Kühlung erstarrten Filamente bzw. der erstarrte Film mit einer Geschwindigkeit A von 2 000 bis 5 500 m/min abgezogen werden bzw. wird, wobei die Filamente bzw. der Film vom Spinndüsenausgang bis zum ersten Abzugsorgan einem Verzug (Draw-Down) B von 500 bis 8 000 unterworfen werden. Eine Abziehgeschwindigkeit von 3 500 bis 5 000 m/min hat sich bestens bewährt.

Die Erfindung wird anhand der nachfolgenden Beispiele näher erläutert.

Polyäthylennaphthalat wurde in einem 200 l Standard Autoklav für Polyester hergestellt. Hierzu wurde eine Mischung von Dimethyl-2,6-Naphthalindicarbonsäureester (48 kg) und Äthylenglykol (32 kg) umgeestert unter Ver-wendung von Mangandiazetat. 4 $H_2O$ (340 ppm), um Polyäthylennaphthalat-Oligomer zu erhalten. Nachdem die Umesterung bei etwa 230°C abgeschlossen war, wurde ein Phosphor-Stabilisator und Antimontrioxid als Polykondensationskatalysator (250 ppm) zugefügt, um das Oligomer bei 290°C zu einem niedrigviskosen Präpolymer zu polymerisieren. Nach Herstellung von Granulat aus diesem Präpolymer wurde das Granulat in festem Zustand in einem Taumeltrockner unter hohem Vakuuum nachkondensiert.

Das entstandene Granulat wurde in einem elektrisch beheizten 30 mm-Extruder verschmolzen und dabei auf 310°C erhitzt. Die Schmelze wurde über eine Meßpumpe (2,4 cm$^3$ pro Umdrehung) in gewünschter Menge einer üblichen, getrennt beheizten Spinngarnitur zugeführt, wobei im Spinnfilterpack das feinste Filter ein 325 mesh Drahtgitter war. Weitere Angaben können den Tabellen I,1 bzw. 1,2 entnommen werden.

Direkt unter der Spinndüse wird die zu Filamenten geformte Schmelze quer mit einem möglichst laminaren Luftstrom angeblasen. Die inzwischen erstarrten Filamente werden nach Austritt aus der Kühlzone zusammengefaßt, mit einer Präparation beaufschlagt und danach über zwei Galetten geführt, wobei die erste Galette die Abzugsgeschwindigkeit des Filamentbündels bestimmt. Beide Galetten werden nicht erwärmt. Danach wird das Filamentbündel aufgewickelt. Die Spinnbedingungen sind in Tabelle I,1 bzw. I,2 und die Eigenschaften des gesponnenen Filamentbündels in Tabelle II,1 bzw. II,2 aufgeführt. Danach wurden die Filamentbündel aus Versuch Nr. 1 und 2 über Galetten unter Anwendung von verschiedenen Streckraten verstreckt. Hierzu wurde zum einen ein Dampfstreckwerk mit einer Länge von 10 m eingesetzt, wobei die Verstreckung bei 260°C und einer Geschwindigkeit von 200 m/min durchgeführt wurde. Zum anderen wurde die Verstreckung bei einer Geschwindigkeit von 8.9 m/min durchgeführt, wobei das Garn durch eine auf 260°C gehaltenen, 1,2 m langen Röhre geführt wurde. Die Verstreckbedingungen sind in Tabelle III und die Eigenschaften der verstreckten Garne in Tabelle IV angegeben.

Die Dichte der Proben wurde bei 23°C mittels einer Davenport Gradientensäule bestimmt, welche eine Mischung von N-Heptan und Tetrachlormethan enthielt, die graduell nach unten abnahm. Der Dichtegradient wurde mit geeichten Schwebekugeln kalibriert. Drei Garnproben wurden mit N-Heptan benetzt und in die Säule gegeben. Nach 6 Stunden wurde die Dichte über die Position der einzelnen Proben in der Säule bestimmt und der Mittelwert gebildet.

Die Doppelbrechung wurde folgendermaßen bestimmt: 10 Filamente wurden in Dibutylphthalat getaucht und parallel zwischen Mikroskopgläser positioniert und in einem Winkel von 45° zu gekreuzten Polarisationsvorrichtungen eines Mikroskops gebracht, welches mit einer Sodiumlampe ($\lambda$ = 0.5893 µm) und einem Senarmont-Kompensator ausgerüstet war. An den Enden der Filamente, die schräg abgeschnitten wurden, wurde die Gesamtdifferenz der Phase Φ durch Messen der Anzahl der Ringe inklusive des Teilrings bestimmt. Für jedes Filament wurde die Doppelbrechung

über die Formel $\Delta n = (\Phi/2\,\pi) \times (\lambda/D)$ bestimmt, wobei D der Durchmesser des Filaments bedeutet. Auch hier wurde der Mittelwert der 10 Messungen gebildet.

Zur Messung der Festigkeit wurden die Garne zunächst bei 21°C und 65% relativer Feuchte konditioniert. Der Titer der Garne wurde durch Wiegen von drei Proben von je 10 m Länge und Bilden des Mittelwertes bestimmt. Mit Hilfe des Instron Meßgerätes mit Standardklemmen wurden 5 Kraft-Dehnungs-Kurven bei einer Längenänderungsrate von 100%/min erstellt, wobei die Einspannlänge des Garns 150 mm und die Vorspannung des Garns 5 mN/tex betrug. Die höchste ermittelte Kraft geteilt durch den Titer ergab die Bruchfestigkeit.

Zur Bestimmung des Schallmoduls wurde ein Garnstück an einem Ende aufgehängt, horizontal über ein Rollenpaar gezogen und am anderen Ende mit 2 cN/tex beaufschlagt. Zwischen den beiden Rollen wurde das Garn zwischen zwei piezoelektrische Wandler zum Senden und Empfangen von Schallimpulsen einer Frequenz von 10 kHz über 60 μsec gebracht. Zum Abgleichen der Pulsauslösung durch einen Zähler wurde ein Oszilloskop eingesetzt. Die Pulsübertragungszeit durch das Garn wurde mit einem Zeitintervall von 15 Sekunden über eine Distanz von 120 cm und danach über eine Distanz von 40 cm fünf mal gemessen. Der Distanzunterschied (80 cm) geteilt durch die mittlere Differenz der Durchgangszeit entspricht der Schallgeschwindigkeit. Das Produkt von Dichte mal dem Quadrat der Schallgeschwindigkeit ergibt den Schallmodul.

Tabelle I,1

| Spinnbedingungen | | | | | |
|---|---|---|---|---|---|
| Versuch Nr. | | 1 | 2 | 3 | 4 |
| Schmelzflußindex | | 18,6 | 8,6 | 8,6 | 8,6 |
| Spinntemperatur | °C | 310 | 312 | 312 | 312 |
| Lochdurchmesser Spinndüse | μm | 1000 | 1000 | 1000 | 1000 |
| Anzahl der Spinnlöcher | | 36 | 36 | 36 | 36 |
| Durchsatz pro Spinnloch | g/min | 1,1 | 1,1 | 2,1 | 2,1 |
| Verzug | | 3336 | 2085 | 1112 | 1335 |
| Luftgeschwindigkeit | m/sec | 0,28 | 0,28 | 0,28 | 0,28 |
| Abzugsgschwindigkeit | m/min | 4000 | 2500 | 2500 | 3000 |
| Φ | | 1,76 | 1,65 | 1,61 | 1,76 |

Tabelle I,2

| Spinnbedingungen | | | | | | | |
|---|---|---|---|---|---|---|---|
| Versuch Nr. | | 5 | 6 | 7 | 8 | 9 | 10 |
| Schmelzflußindex | | 8,6 | 8,6 | 8,6 | 8,6 | 8,6 | 7,1 |
| Spinntemperatur | °C | 312 | 312 | 312 | 312 | 312 | 314 |
| Lochdurchmesser Spinndüse | μm | 1000 | 1000 | 1000 | 1000 | 1000 | 1000 |
| Anzahl der Spinnlöcher | | 36 | 36 | 36 | 36 | 36 | 36 |
| Durchsatz pro Spinnloch | g/min | 2,1 | 2,1 | 2,1 | 2,1 | 2,9 | 2,1 |
| Verzug | | 1557 | 1779 | 2002 | 2224 | 1620 | 1536 |
| Luftgeschwindigkeit | m/sec | 0,28 | 0,28 | 0,28 | 0,28 | 0,28 | 0,1 |
| Abzugsgeschwindigkeit | m/min | 3500 | 4000 | 4500 | 5000 | 5000 | 3500 |
| Φ | | 1,77 | 1,77 | 1,77 | 1,76 | 1,75 | 1,77 |

Tabelle II,1

| Eigenschaften des gesponnenen Garns | | | | | |
|---|---|---|---|---|---|
| Versuch Nr. | | 1 | 2 | 3 | 4 |
| Gesamttiter | dtex | 97 | 160 | 296 | 253 |
| Filamentzahl | | 36 | 36 | 36 | 36 |
| Reißfestigkeit | mN/tex | 590 | 460 | 429 | 450 |
| Reißdehnung | % | 9,7 | 7,5 | 11,7 | 10,7 |
| Dichte | kg/m$^3$ | 1355,5 | 1358,0 | 1355,2 | 1355,7 |

Tabelle II,1   (fortgesetzt)

| Eigenschaften des gesponnenen Garns | | | | | |
|---|---|---|---|---|---|
| Versuch Nr. | | 1 | 2 | 3 | 4 |
| Doppelbrechung | $\Delta n$ | 0,1885 | 0,1757 | 0,1789 | 0,1846 |
| Schallmodul | GPa | 24,7 | 24,9 | 20,3 | 21,8 |
| DSC-Schmelzpunkt | °C | 298 | 304 | 294 | 296 |
| Heißluftschrumpf bei 190 °C | % | 1,3 | 0,7 | 1,1 | 1,2 |
| Dimensionsstabilität | mN/tex % | 192 | 351 | 176 | 170 |

Tabelle II,2

| Eigenschaften des gesponnenen Garns | | | | | | | |
|---|---|---|---|---|---|---|---|
| Versuch Nr. | | 5 | 6 | 7 | 8 | 9 | 10 |
| Gesamttiter | dtex | 222 | 195 | 167 | 134 | 216 | 199 |
| Filamentzahl | | 36 | 36 | 36 | 36 | 36 | 36 |
| Reißfestigkeit | mN/tex | 440 | 450 | 457 | 434 | 504 | 540 |
| Reißdehnung | % | 9,2 | 8,3 | 7,3 | 6,8 | 8,3 | 11,1 |
| Dichte | kg/m³ | 1357,2 | 1358,2 | 1359,1 | 1359,8 | 1360,2 | 1356,0 |
| Doppelbrechung | $\Delta n$ | 0,1888 | 0,1899 | 0,1916 | 0,1936 | 0,2005 | 0,1848 |
| Schallmodul | GPa | 23,0 | 24,9 | 25,8 | 27,8 | 26,5 | 23,2 |
| DSC-Schmelzpunkt | °C | 298 | 299 | 301 | 304 | 298 | 296 |
| Heißluftschrumpf bei 190 °C | % | 1,0 | 1,1 | 1,1 | 1,3 | 1,3 | 1,5 |
| Dimensionsstabilität | mN/tex % | 215 | 216 | 233 | 201 | 193 | 164 |

Tabelle III

| Verstreckbedingungen | | | | | | |
|---|---|---|---|---|---|---|
| Versuch Nr. | | 1 | 1 | 1 | 1 | 2 |
| Lauf | | a | b | c | d | e |
| Verstreckung | 1: | 1,03 | 1,01 | 1,03 | 1,06 | 1,04 |
| Verstrecktemperatur | °C | 260 | 260 | 260 | 260 | 260 |
| Dampfstreckwerk | | ja | - | - | - | - |
| Röhrenofen | | - | ja | ja | ja | ja |

Tabelle IV

| Eigenschaften des verstreckten Garns | | | | | | |
|---|---|---|---|---|---|---|
| Versuch Nr. | | 1 | 1 | 1 | 1 | 2 |
| Lauf | | a | b | c | d | e |
| Reißfestigkeit | mN/tex | 505 | 490 | 559 | 510 | 418 |
| Reißdehnung | % | 4,4 | 6,1 | 4,3 | 2,4 | 2,7 |
| Dichte | kg/m³ | 1367,2 | 1370,3 | 1369,0 | 1367,9 | 1369,0 |
| Doppelbrechung | $\Delta n$ | 0,2668 | 0,2647 | 0,2769 | 0,3054 | 0,2658 |
| Schallmodul | GPa | 36,1 | 31,4 | 35,8 | 41,9 | 37,7 |
| DSC-Schmelzpunkt | °C | 296 | 298 | 296 | 293 | 304 |
| Heißluftschrumpf bei 190 °C | % | 2,3 | 1,7 | 2,2 | 2,2 | 1,9 |
| Dimensionsstabilität | mN/tex % | 145 | 188 | 178 | 203 | 202 |

**EP 0 630 995 B1**

**Patentansprüche**

1. Multifilamentgarn, Monofilament oder filmartiges Gebilde zumindest aus 85 Gew.% Polyäthylennaphthalat, mit einer Festigkeit von mindestens 400 mN/tex, herstellbar aus einem Polymer, welches einen Schmelzflußindex (Melt-Flow-Index) C von 3 bis 26 aufweist, dadurch gekennzeichnet, daß es einen DSC-Schmelzpunkt zwischen 292°C und 312°C aufweist, wobei der DSC-Schmelzpunkt an einer Probenmenge von 2,5 mg bei einer Erhitzungsgeschwindigkeit von 20°C pro min zu messen ist.

2. Multifilamentgarn, Monofilament oder filmartiges Gebilde nach Anspruch 1, dadurch gekennzeichnet, daß es zumindest aus 95 Gew.% aus Polyäthylen-2,6-naphthalat besteht.

3. Multifilamentgarn, Monofilament oder filmartiges Gebilde nach einem oder mehreren der Anspruch 1 oder 2, dadurch gekennzeichnet, daß es einen Heißluftschrumpf, gemessen nach 15 min Erhitzung auf 190°C, von weniger als 3,5 % aufweist.

4. Multifilamentgarn, Monofilament oder filmartiges Gebilde nach einem oder mehreren der Ansprüche 1 bis 3, dadurch gekennzeichnet, daß es eine Dimensionsstabilität von mehr als 120 aufweist, wobei die Dimensionsstabilität der Quotient der Festigkeit des Garns bei 2% Dehnung dividiert durch den Heißluftschrumpf des Garns ist.

5. Multifilamentgarn, Monifilament oder filmartiges Gebilde nach einem oder mehreren der Ansprüche 1 bis 4, dadurch gekennzeichnet, daß es eine Dichte von mehr als 1350 kg/m$^3$ aufweist.

6. Multifilamentgarn, Monofilament oder filmartiges Gebilde nach einem oder mehreren der Ansprüche 1 bis 5, dadurch gekennzeichnet, daß es einen DSC-Schmelzpunkt von mindestens 295°C aufweist.

7. Multifilamentgarn, Monofilament oder filmartiges Gebilde nach einem oder mehreren der Ansprüche 1 bis 6, dadurch gekennzeichnet, daß es einen DSC-Schmelzpunkt von mindestens 300°C aufweist.

8. Multifilamentgarn, Monofilament oder filmartiges Gebilde nach einem oder mehreren der Ansprüche 1 bis 7, dadurch gekennzeichnet, daß es einen Heißluftschrumpf, gemessen nach 15 min Erhitzung auf 190°C, von weniger als 2,5 % aufweist.

9. Multifilamentgarn, Monofilament oder filmartiges Gebilde nach einem oder mehreren der Ansprüche 1 bis 8, dadurch gekennzeichnet, daß es einen Heißluftschrumpf, gemessen nach 15 rnin Erhitzung auf 190°C, von weniger als 1,6 % aufweist.

10. Multifilamentgarn, Monofilament oder filmartiges Gebilde nach einem oder mehreren der Ansprüche 1 bis 9, dadurch gekennzeichnet, daß es eine Dimensionsstabilität von mindestens 150 aufweist.

11. Multifilamentgarn, Monofilament oder filmartiges Gebilde nach einem oder mehreren der Ansprüche 1 bis 10, dadurch gekennzeichnet, daß es eine Dimensionsstabilität von mindestens 200 aufweist.

12. Multifilamentgarn, Monofilament oder filmartiges Gebilde nach einem oder mehreren der Ansprüche 1 bis 11, dadurch gekennzeichnet, daß es eine Dichte von mehr als 1362 kg/m$^3$ aufweist.

13. Multifilamentgarn, Monofilament oder filmartiges Gebilde nach einem oder mehreren der Ansprüche 1 bis 12, dadurch gekennzeichnet, daß es verstreckt ist.

14. Verfahren zur Herstellung eines Multifilamentgarns, Monofilaments oder Films nach einem oder mehreren der Ansprüche 1 bis 13, bei dem ein Polymer, welches mindestens 85 Gew.% Polyäthylennaphthalat enthält, aus einer Mehrloch-Spinndüse extrudiert wird, die über Kühlung erstarrten Filamente bzw. der über Kühlung erstarrte Film mit einer Geschwindigkeit von 500 bis 10 000 m/min abgezogen werden, wobei die Filamente bzw. der Film vom Spinndüsenausgang bis zum ersten Abzugsorgan einem Verzug (Draw-Down) B von 40 bis 25 000 unterworfen werden, dadurch gekennzeichnet, daß als einzusetzendes Polymer ein Polymer mit einem Schmelzflußindex (Melt-Flow-Index) C von 3 bis 26 ausgewählt wird und Abzugsgeschwindigkeit A, Verzug B und Schmelzflußindex C derart gewählt werden, daß $\Phi > 1{,}15$, wobei

$$\Phi = \left[ \frac{2.5}{1 + e^{(-0.6 \cdot (T + O_5))}} \right]$$

und

$$\Psi = \frac{W_{13}}{1 + e^{-0.6 \cdot \left[ W_1 \cdot \left[ \frac{(A-500)}{9500} \cdot 2 - 1 \right] + W_2 \cdot \left[ \frac{(B-40)}{24960} \cdot 2 - 1 \right] + W_3 \cdot \left[ \frac{(C-5)}{15} \cdot 2 - 1 \right] + O_1 \right]}} +$$

$$\frac{W_{14}}{1 + e^{-0.6 \cdot \left[ W_4 \cdot \left[ \frac{(A-500)}{9500} \cdot 2 - 1 \right] + W_5 \cdot \left[ \frac{(B-40)}{24960} \cdot 2 - 1 \right] + W_6 \cdot \left[ \frac{(C-5)}{15} \cdot 2 - 1 \right] + O_2 \right]}} +$$

$$\frac{W_{15}}{1 + e^{-0.6 \cdot \left[ W_7 \cdot \left[ \frac{(A-500)}{9500} \cdot 2 - 1 \right] + W_8 \cdot \left[ \frac{(B-40)}{24960} \cdot 2 - 1 \right] + W_9 \cdot \left[ \frac{(C-5)}{15} \cdot 2 - 1 \right] + O_3 \right]}} +$$

$$\frac{W_{16}}{1 + e^{-0.6 \cdot \left[ W_{10} \cdot \left[ \frac{(A-500)}{9500} \cdot 2 - 1 \right] + W_{11} \cdot \left[ \frac{(B-40)}{24960} \cdot 2 - 1 \right] + W_{12} \cdot \left[ \frac{(C-5)}{15} \cdot 2 - 1 \right] + O_4 \right]}}$$

und

| | | |
|---|---|---|
| $W_1 = 3{,}62416$ | $W_2 = -66{,}57265$ | $W_3 = -0{,}36305$ |
| $O_1 = -65{,}2267$ | $W_4 = -5{,}51435$ | $W_5 = -15{,}02366$ |
| $W_6 = -0{,}00704$ | $O_2 = -22{,}71156$ | $W_7 = 4{,}60509$ |
| $W_8 = -33{,}08694$ | $W_9 = -0{,}83813$ | $O_3 = -37{,}28374$ |
| $W_{10} = 43{,}44371$ | $W_{11} = 5{,}26325$ | $W_{12} = -5{,}66574$ |
| $O_4 = 29{,}64359$ | $W_{13} = -7{,}37680$ | $W_{14} = 7{,}17561$ |
| $W_{15} = 9{,}89252$ | $W_{16} = 3{,}02096$ | $O_5 = -1{,}59320$ |

15. Verfahren nach Anspruch 14, dadurch gekennzeichnet, daß Polyäthylennaphtalat bei einer Temperatur T ersponnen wird, wobei gilt:

$$100 \, e^{-0{,}46 \, C} + 300 \leq T \leq 100 \, e^{-0{,}46 \, C} + 325.$$

16. Verfahren nach Anspruch 14 oder 15, dadurch gekennzeichnet, daß die aus der Spinndüse extrudierten Filamente bzw. der extrudierte Film mit einem auf 10 bis 35°C gehaltenen Fluid mit einer Geschwindigkeit von 0,1 bis 1,0 m/sec angeblasen werden bzw. wird.

17. Verfahren nach einem oder mehreren der Ansprüche 14 bis 16, dadurch gekennzeichnet, daß ein Polyäthylennaphthalat mit einen Schmelzflußindex (Melt-Flow-Index) C von 6 bis 20 eingesetzt wird, die über Kühlung erstarrten Filamente bzw. der erstarrte Film mit einer Geschwindigkeit A von 500 bis 8 000 m/min abgezogen werden bzw. wird, wobei die Filamente bzw. der Film vom Spinndüsenausgang bis zum ersten Abzugsorgan einem Verzug (Draw-Down) B von 100 bis = 10 000 unterworfen werden bzw. wird.

18. Verfahren nach Anspruch 17, dadurch gekennzeichnet, daß ein Polyäthylennaphthalat mit einen Schmelzflußindex (Melt-Flow-Index) C von 7 bis 15 eingesetzt wird, die über Kühlung erstarrten Filamente bzw. der erstarrte Film mit einer Geschwindigkeit A von 2 000 bis 5 500 m/min abgezogen werden bzw. wird, wobei die Filamente bzw. der Film vom Spinndüsenausgang bis zum ersten Abzugsorgan einem Verzug (Draw-Down) B von 500 bis 8 000 unterworfen werden bzw. wird.

19. Verfahren nach einem oder mehreren der Ansprüche 14 bis 18, dadurch gekennzeichnet, daß Polyäthylennaphtalat bei einer Temperatur T ersponnen wird, wobei in Abhängigkeit vom Schmelzflußindex (Melt-Flow-Index) C gilt:

$$100\,e^{-0,46\,C} + 305 \leq T \leq 100\,e^{-0,46\,C} + 318.$$

20. Verfahren nach einem oder mehreren der Ansprüche 14 bis 19, dadurch gekennzeichnet, daß die aus der Spinndüse extrudierten Filamente bzw. der extrudierte Film mit einem auf 12 bis 25°C gehaltenen Fluid angeblasen werden bzw. wird.

21. Verfahren nach einem oder mehreren der Ansprüche 14 bis 20, dadurch gekennzeichnet, daß die aus der Spinndüse extrudierten Filamente bzw. der extrudierte Film mit einer Geschwindigkeit von 0,2 bis 0,6 m/sec angeblasen werden bzw. wird.

## Claims

1. Multifilament yarn, monofilament or film-like structure comprising at least 85 wt.% polyethylene naphthalate, having a strength of at least 400 mN/tex, producible from a polymer which has a melt flow index C of 3 to 26, characterised in that it has a DSC melting point of between 294°C and 312°C, wherein the DSC melting point is to be measured on a sample size of 2.5 mg at a heating rate of 20°C per minute.

2. Multifilament yarn, monofilament or film-like structure according to claim 1, characterised in that it consists to an extent of at least 95 wt.% of polyethylene 2,6-naphthalate.

3. Multifilament yarn, monofilament or film-like structure according to one or more of claims 1 or 2, characterised in that it has hot-air shrinkage, measured after 15 minutes' heating to 190°C, of less than 3.5%.

4. Multifilament yarn, monofilament or film-like structure according to one or more of claims 1 to 3, characterised in that it has dimensional stability of greater than 120, wherein dimensional stability is the quotient of yarn strength at 2% extension divided by the hot-air shrinkage of the yarn.

5. Multifilament yarn, monofilament or film-like structure according to one or more of claims 1 to 4, characterised in that it has a density of greater than 1350 kg/m³.

6. Multifilament yarn, monofilament or film-like structure according to one or more of claims 1 to 5, characterised in that it has a DSC melting point of at least 295°C.

7. Multifilament yarn, monofilament or film-like structure according to one or more of claims 1 to 6, characterised in that it has a DSC melting point of at least 300°C.

8. Multifilament yarn, monofilament or film-like structure according to one or more of claims 1 to 7, characterised in that it has hot-air shrinkage, measured after 15 minutes' heating to 190°C, of less than 2.5%.

9. Multifilament yarn, monofilament or film-like structure according to one or more of claims 1 to 8, characterised in that it has hot-air shrinkage, measured after 15 minutes' heating to 190°C, of less than 1.6%.

10. Multifilament yarn, monofilament or film-like structure according to one or more of claims 1 to 9, characterised in that it has dimensional stability of at least 150.

11. Multifilament yarn, monofilament or film-like structure according to one or more of claims 1 to 10, characterised in that it has dimensional stability of at least 200.

12. Multifilament yarn, monofilament or film-like structure according to one or more of claims 1 to 11, characterised in that it has a density of greater than 1362 kg/m$^3$.

13. Multifilament yarn, monofilament or film-like structure according to one or more of claims 1 to 12, characterised in that it is drawn.

14. Process for the production of a multifilament yarn, monofilament or film according to one or more of claims 1 to 13, in which a polymer, which contains at least 85 wt.% polyethylene naphthalate, is extruded from a multihole spinneret, the filaments or film solidified by cooling are/is drawn off at a speed of 500 to 10000 m/min, wherein, between the spinneret outlet and the first draw-off element, the filaments or film are/is subjected to a draw-down B of 40 to 25000, characterised in that the polymer selected for use is a polymer having a melt flow index C of 3 to 26 and the draw-off speed A, draw-down B and melt flow index C are selected such that $\Phi > 1.15$, wherein

$$\Phi = \left[ \frac{2.5}{1 + e^{(-0.6 \times (\Psi + O_5))}} \right]$$

and

$$\Psi = \frac{W_{13}}{1 + e^{-0.6 \times \left[ W_1 \times \left[ \frac{(A-500)}{9500} \times 2 - 1 \right] + W_2 \times \left[ \frac{(B-40)}{24960} \times 2 - 1 \right] + W_3 \times \left[ \frac{(C-5)}{15} \times 2 - 1 \right] + O_1 \right]}} +$$

$$\frac{W_{14}}{1 + e^{-0.6 \times \left[ W_4 \times \left[ \frac{(A-500)}{9500} \times 2 - 1 \right] + W_5 \times \left[ \frac{(B-40)}{24960} \times 2 - 1 \right] + W_6 \times \left[ \frac{(C-5)}{15} \times 2 - 1 \right] + O_2 \right]}} +$$

$$\frac{W_{15}}{1 + e^{-0.6 \times \left[ W_7 \times \left[ \frac{(A-500)}{9500} \times 2 - 1 \right] + W_8 \times \left[ \frac{(B-40)}{24960} \times 2 - 1 \right] + W_9 \times \left[ \frac{(C-5)}{15} \times 2 - 1 \right] + O_3 \right]}} +$$

$$\frac{W_{16}}{1 + e^{-0.6 \times \left[ W_{10} \times \left[ \frac{(A-500)}{9500} \times 2 - 1 \right] + W_{11} \times \left[ \frac{(B-40)}{24960} \times 2 - 1 \right] + W_{12} \times \left[ \frac{(C-5)}{15} \times 2 - 1 \right] + O_4 \right]}}$$

and

| $W_1 = 3.62416$ | $W_2 = -66.57265$ | $W_3 = -0.36305$ |
|---|---|---|
| $O_1 = -65.2267$ | $W_4 = -5.51435$ | $W_5 = -15.02366$ |
| $W_6 = -0.00704$ | $O_2 = -22.71156$ | $W_7 = 4.60509$ |
| $W_8 = -33.08694$ | $W_9 = -0.83813$ | $O_3 = -37.28374$ |

(continued)

| $W_{10} = 43.44371$ | $W_{11} = 5.26325$ | $W_{12} = -5.66574$ |
|---|---|---|
| $O_4 = 29.64359$ | $W_{13} = -7.37680$ | $W_{14} = 7.17561$ |
| $W_{15} = 9.89252$ | $W_{16} = 3.02096$ | $O_5 = -1.59320$ |

**15.** Process according to claim 14, characterised in that polyethylene naphthalate is spun at a temperature T, wherein the following applies:

$$100\ e^{-0.46\ C} + 300 \leq T \leq 100\ e^{-0.46\ C} + 325.$$

**16.** Process according to claim 14 or 15, characterised in that the filaments or film extruded from the spinneret are/is blown with a fluid maintained at 10 to 35°C at a velocity of 0.1 to 1.0 m/sec.

**17.** Process according to one or more of claims 14 to 16, characterised in that a polyethylene naphthalate having a melt flow index C of 6 to 20 is used, the filaments or film solidified by cooling are/is drawn off at a speed A of 500 to 8000 m/min, wherein, between the spinneret outlet and the first draw-off element, the filaments or film are/is subjected to a draw-down B of 100 to = 10000.

**18.** Process according to claim 17, characterised in that a polyethylene naphthalate having a melt flow index C of 7 to 15 is used, the filaments or film solidified by cooling are/is drawn off at a speed A of 2000 to 5500 m/min, wherein, between the spinneret outlet and the first draw-off element, the filaments or film are/is subjected to a draw-down B of 500 to 8000.

**19.** Process according to one or more of claims 14 to 18, characterised in that polyethylene naphthalate is spun at a temperature T, wherein, as a function of melt flow index C, the following applies:

$$100\ e^{-0.46\ C} + 305 \leq T \leq 100\ e^{-0.46\ C} + 318.$$

**20.** Process according to one or more of claims 14 to 19, characterised in that the filaments or film extruded from the spinneret are/is blown with a fluid maintained at 12 to 25°C.

**35.** Process according to one or more of claims 14 to 20, characterised in that the filaments or film extruded from the spinneret are/is blown at a velocity of 0.2 to 0.6 m/sec.

**Revendications**

**1.** Fil multifilament, monofilament ou produit de type film, comportant au moins 85 % en poids de poly(éthylène naphtalate), ayant une ténacité au moins égale à 400 mN/tex, que l'on peut préparer à partir d'un polymère présentant un indice de fluidité à chaud (Melt Flow Index) C allant de 3 à 26, caractérisé par le fait que son point de fusion déterminé par ACD est compris entre 294 °C et 312 °C, lequel point de fusion par ACD doit être déterminé sur une quantité d'échantillon de 2,5 mg et avec une vitesse de chauffage de 20 °C par minute.

**2.** Fil multifilament, monofilament ou produit de type film selon la revendication 1, caractérisé par le fait qu'il contient au moins 95 % en poids de poly(éthylène 2,6-naphtalate).

**3.** Fil multifilament, monofilament ou produit de type film selon une ou plusieurs des revendications 1 ou 2, caractérisé par le fait qu'il présente un retrait à chaud, mesuré après 15 minutes de chauffage à 190 °C, inférieur à 3,5 %.

**4.** Fil multifilament, monofilament ou produit de type film selon une ou plusieurs des revendications 1 à 3, caractérisé par le fait qu'il présente une stabilité dimensionnelle supérieure à 120, la stabilité dimensionnelle étant définie comme le rapport de la ténacité du fil à 2 % d'allongement au retrait à chaud du fil.

**5.** Fil multifilament, monofilament ou produit de type film selon une ou plusieurs des revendications 1 à 4, caractérisé par le fait qu'il présente une masse volumique supérieure à 1350 kg/m$^3$.

6. Fil multifilament, monofilament ou produit de type film selon une ou plusieurs des revendications 1 à 5, caractérisé par le fait que son point de fusion déterminé par ACD est au moins égal à 295 °C.

7. Fil multifilament, monofilament ou produit de type film selon une ou plusieurs des revendications 1 à 6, caractérisé par le fait que son point de fusion déterminé par ACD est au moins égal à 300 °C.

8. Fil multifilament, monofilament ou produit de type film selon une ou plusieurs des revendications 1 à 7, caractérisé par le fait que le retrait à chaud, mesuré après 15 minutes de chauffage à 190 °C, est inférieur à 2,5 %.

9. Fil multifilament, monofilament ou produit de type film selon une ou plusieurs des revendications 1 à 8, caractérisé par le fait que le retrait à chaud, mesuré après 15 minutes de chauffage à 190 °C, est inférieur à 1,6 %.

10. Fil multifilament, monofilament ou produit de type film selon une ou plusieurs des revendications 1 à 9, caractérisé par le fait qu'il présente une stabilité dimensionnelle au moins égale à 150.

11. Fil multifilament, monofilament ou produit de type film selon une ou plusieurs des revendications 1 à 10, caractérisé par le fait qu'il présente une stabilité dimensionnelle au moins égale à 200.

12. Fil multifilament, monofilament ou produit de type film selon une ou plusieurs des revendications 1 à 11, caractérisé par le fait qu'il présente une masse volumique supérieure à 1362 kg/m$^3$.

13. Fil multifilament, monofilament ou produit de type film selon une ou plusieurs des revendications 1 à 12, caractérisé par le fait qu'il a subi un étirage.

14. Procédé de fabrication d'un fil multifilament, d'un monofilament ou d'un film selon une ou plusieurs des revendications 1 à 13, qui comprend les étapes consistant à extruder un polymère contenant au moins 85 % en poids de poly(éthylène naphtalate) par une filière à perforations multiples, à lever les filaments ou le film solidifié(s) par refroidissement à une vitesse de 500 à 10 000 m/minute, les filaments ou le film subissant, entre la sortie de filière et le premier dispositif de levée, un étirage (Draw-Down) B compris entre 40 et 25 000, caractérisé par le fait que l'on choisit, comme polymère à utiliser, un polymère ayant un indice de fluidité à chaud (Melt-Flow-Index) C allant de 3 à 26, et par le fait que la vitesse de levée A, l'étirage B et l'indice de fluidité à chaud C sont choisis de manière à ce que Φ soit supérieur à 1,15, Φ étant défini de la manière suivante :

$$\Phi = \left[ \frac{2.5}{1 + e^{(-0.6 \cdot (\overline{x} \cdot 0_5))}} \right]$$

où

$$\Psi = \cfrac{W_{13}}{1+e^{-3.6 \cdot \left[W_1 \cdot \left[\frac{(A-500)}{9500} \cdot 2-1\right] + W_2 \cdot \left[\frac{(B-40)}{24960} \cdot 2-1\right] + W_3 \cdot \left[\frac{(C-5)}{15} \cdot 2-1\right] + O_1\right]}} +$$

$$\cfrac{W_{14}}{1+e^{-0.6 \cdot \left[W_4 \cdot \left[\frac{(A-500)}{9500} \cdot 2-1\right] + W_5 \cdot \left[\frac{(B-40)}{24960} \cdot 2-1\right] + W_6 \cdot \left[\frac{(C-5)}{15} \cdot 2-1\right] + O_2\right]}} +$$

$$\cfrac{W_{15}}{1+e^{-0.6 \cdot \left[W_7 \cdot \left[\frac{(A-500)}{9500} \cdot 2-1\right] + W_8 \cdot \left[\frac{(B-40)}{24960} \cdot 2-1\right] + W_9 \cdot \left[\frac{(C-5)}{15} \cdot 2-1\right] + O_3\right]}} +$$

$$\cfrac{W_{16}}{1+e^{-0.6 \cdot \left[W_{10} \cdot \left[\frac{(A-500)}{9500} \cdot 2-1\right] + W_{11} \cdot \left[\frac{(B-40)}{24960} \cdot 2-1\right] + W_{12} \cdot \left[\frac{(C-5)}{15} \cdot 2-1\right] + O_4\right]}}$$

et

| | | |
|---|---|---|
| $W_1 = 3,62416$ | $W_2 = -66,57265$ | $W_3 = -0,36305$ |
| $O_1 = -65,2267$ | $W_4 = -5,51435$ | $W_5 = -15,02366$ |
| $W_6 = -0,00704$ | $O_2 = -22,71156$ | $W_7 = 4,60509$ |
| $W_8 = -33,08694$ | $W_9 = -0,83813$ | $O_3 = -37,28374$ |
| $W_{10} = 43,44371$ | $W_{11} = 5,26325$ | $W_{12} = -5,66574$ |
| $O_4 = 29,64359$ | $W_{13} = -7,37680$ | $W_{14} = 7,17561$ |
| $W_{15} = 9,89252$ | $W_{16} = 3,02096$ | $O_5 = -1,59320$ |

**15.** Procédé selon la revendication 14, caractérisé par le fait que le filage du poly(éthylène naphtalate) se fait à une température T satisfaisant à l'inégalité suivante :

$$100e^{-0,46\,C} + 300 \le T \le 100e^{-0,46\,C} + 325.$$

**16.** Procédé selon la revendication 14 ou 15, caractérisé en ce que les filaments ou le film extrudé(s) de la filière sont (est) exposé(s) à un fluide maintenu à une température allant de 10 à 35 °C et s'écoulant à une vitesse allant de 0,1 à 1,0 m/sec.

**17.** Procédé selon une ou plusieurs des revendications 14 à 16, caractérisé par le fait que l'on utilise un poly(éthylène naphtalate) ayant un indice de fluidité à chaud (Melt-Flow-Index) C compris entre 6 et 20, que l'on lève les filaments ou le film solidifié(s) par refroidissement à une vitesse A allant de 500 à 8000 m/minute, lesdits filaments ou ledit film subissant, entre la sortie de la filière et le premier dispositif de levée, un étirage (Draw-Down) B compris entre 100 et 10 000.

**18.** Procédé selon la revendication 17, caractérisé par le fait que l'on utilise un poly(éthylène naphtalate) ayant un indice de fluidité à chaud (Melt-Flow-Index) C allant de 7 à 15, que l'on lève les filaments ou le film solidifié(s) par refroidissement à une vitesse A allant de 2000 à 5500 m/minute, lesdits filaments ou ledit film subissant, entre la sortie de la filière et le premier dispositif de levée, un étirage (Draw-Down) B compris entre 500 et 8 000.

**19.** Procédé selon une ou plusieurs des revendications 14 à 18, caractérisé par le fait que le filage du poly(éthylène naphtalate) se fait à une température T reliée à l'indice de fluidité à chaud C par l'inégalité suivante :

$$100e^{-0,46\,C} + 305 \leq T \leq 100e^{-0,46\,C} + 318.$$

**20.** Procédé selon une ou plusieurs des revendications 14 à 19, caractérisé en ce que les filaments ou le film extrudé(s) sont (est) exposé(s) à un fluide maintenu à une température allant de 12 à 25 °C

**21.** Procédé selon une ou plusieurs des revendications 14 à 20, caractérisé par le fait que les filaments ou le film sortant de la filière sont (est) exposé(s) à un fluide s'écoulant à une vitesse allant de 0,2 à 0,6 m/sec.